# EUROPEAN PATENT APPLICATION

(11) **EP 2 837 488 A1**
(43) Date of publication of application: **18.02.2015**
(21) Application number: 13180759.6
(22) Date of filing: 16.08.2013
(51) Int. Cl.: B29C 53/12, F16F 1/02

(54) **Methode of producing a spring made of composite material**

(71) Applicant: SuperTEX composites GmbH, 6410 Telfs (AT)
(72) Inventor: Troi, Valentine, 6020 Innsbruck (AT); Schennach, Oliver, 6414 Mieming (AT)
(74) Representative: Dilg, Haeusler, Schindelmann Patentanwaltsgesellschaft mbH

(57) **Abstract**

In accordance with embodiments of the herein disclosed subject matter it is described a method of producing a spring (130) wherein the spring (130) comprises at least the tool windings and is formed of a composite material, wherein the composite material and comprises a matrix (120) and the base element (102). The method comprises providing an intermediate product (100, 200) comprising the base element (102) within an outer envelope (104), wherein the base element (102) provides a plurality of cavities (118) within the altar envelope. Further, the method comprises shaping the intermediate product (100, 200) into the at least two windings and introducing the matrix (120) into the cavities (118) before, during or after the shaping of the intermediate product (100, 200). After shaping of the intermediate product (100, 200), the method comprises hardening the matrix (120) in the cavities (118). Optionally, the intermediate product (100, 200) comprises a matrix supply fluid path (110) which promotes flow of the matrix (120) through the intermediate product (100, 200) in order to fill the plurality of cavities (118).

## Description

### FIELD OF INVENTION

The present invention relates to the field of manufacturing of springs which are made of a composite material.

### BACKGROUND

DE 102011018217 A1 relates to a method of producing spring elements from a fiber composite material without the necessity to use liquid reaction resin systems. To this end, a rod like core element, which is shaped according to a hollow profile of the spring element to be produced, is covered with a textile tube which is impregnated with a consolidatable reaction resin system. The textile tube is cured to the self-stable curing state. Thereafter the rod like core element, together with the impregnated textile tube, is heated to thermoform temperature and the now shapeable core element with the textile tube is coiled about a die and subsequently cooled down and removed from the die.

### SUMMARY

In view of the above-described situation, there exists a need for an improved technique that enables to provide a spring made of a composite material in an efficient way.

This need may be met by the subject matter according to the independent claims. Advantageous embodiments of the herein disclosed subject matter are described by the dependent claims.

According to an embodiment of a first aspect of the herein disclosed subject matter there is provided a method of producing a spring, the spring comprising at least two windings and being formed of a composite material, the composite material comprising a matrix and a base element, the method comprising: providing an intermediate product comprising the base element within an outer envelope, the base element providing a plurality of cavities within the outer envelope; shaping the intermediate product into the at least two windings; introducing the matrix into the cavities before, during or after the shaping of the intermediate product; after the shaping of the intermediate product, hardening the matrix in the cavities.

The first aspect of the herein disclosed subject matter is based on the idea that the technology described in WO 2010/129975 A2 for the production of structural elements might be used for production of composite material springs. WO 2010/129975 A2 relates to a method for producing a structural element comprising a fibre-reinforced plastic. A flexible hose is provided with a tubular woven fabric and shaped into the desired form. Subequently, a plastic applied to the tubular woven fabric is cured. The woven fabric may be provided with an additional tube envelope which may be a heat-shrinkable sleeve.

According to an embodiment of the first aspect, the matrix is introduced into the cavities before shaping of the intermediate product. This has the advantage that the introduction of the matrix may be performed on a straight, unbent intermediate product. This may be advantageous in mass production. Hardening of the matrix should only occur after shaping the intermediate product into the at least two windings. This may be fact that for example by a suitable selection of the hardening time of the matrix or e.g. by using, in accordance with an embodiment, a matrix hardening of which is triggered by external activators, such as energy, e.g. in the form of temperature, radiation, sound, or chemical substances such as hardening agents, gases, etc.

According to a further embodiment, the matrix is introduced into the cavities after shaping the intermediate product. With such an embodiment, fast hardening matrix materials may be used.

According to a still further embodiment, the matrix is introduced into the cavities during shaping of the intermediate product

According to an embodiment, the method further comprises providing an inner envelope within the outer envelope, the base element being located between the outer envelope and the inner envelope. This embodiment allows to produce springs which have a hollow cross-section. Hence, large cross-sections may be provided while still keeping the weight of the spring and the material consumption at an acceptable level.

According to an embodiment, the inner envelope is dimensionally stable and plastically deformable. That plastically deformable inner envelope allows the shaping of the intermediate product on conventional spring coiling machine. According to an embodiment, the method comprises shaping of the intermediate product into the at least two windings on a conventional coiling machine for metal springs. According to an embodiment, the inner envelope is made of metal. In an embodiment, for example, if the inner envelope is made of metal, the inner envelope is maintained in the spring (i.e. the inner envelope is not removed). Hence, the inner envelope contributes to the structural properties of the spring produced according to a method disclosed herein. According to an embodiment, the inner envelope is formed by a solid element, e.g. a wire. Such an inner envelope is in particular suitable for a small diameter envelope. The wire may be made of metal, e.g. aluminum or steel.

According to a further embodiment, the outer envelope is plastically deformable. For example according to an embodiment the outer envelope is made of metal. According to an embodiment, the (outer and/inner) envelope made of plastically deformable material, such as metal, is maintained after shaping the intermediate product into the at least two windings. In such a case the respective envelope may contribute to the mechanical properties of the spring.

In accordance with an embodiment, shaping the intermediate product into the at least two windings includes plastically deforming at least one of the inner envelope (if present at all) and the outer envelope.

According to an embodiment, the outer envelope comprises a predetermined breaking line. The predetermined breaking line may assist in the removal of the outer envelope. According to an embodiment the inner envelope - if present - comprises a predetermined breaking line. For example, according to an embodiment the method comprises removing the inner envelope. The removability of the inner envelope after hardening the matrix in the cavities may depend e.g. on the material of the inner envelope, on the length of the inner envelope, the wall thickness of the inner envelope, and, if present, on the predetermined breaking line. According to an embodiment, the predetermined breaking line may be formed as disclosed in European patent application No. 12189609.6.

According to an embodiment, the base element comprises a plurality of fibers and the plurality of cavities is at least in part provided by the interstitial spaces between the fibers.

Using fibers for the base element has the advantage that the methods according to embodiments of the herein disclosed subject matter provide a fiber-reinforced spring. However, it should be understood that embodiments of the herein disclosed subject matter may be realized by providing a base element of any different type as long as the base element provides a plurality of cavities within the outer envelope and wherein the cavities and/or the outer envelope and/or the base element are configured such that the matrix can be introduced into the cavities of the intermediate product.

The type of the fibers may be chosen according to the actual requirements on in the spring. For example according to an embodiment glass fibers are suitable due to its high failure strain. Further carbon fibers have also been successfully tested for the production of springs.

According to an embodiment, the plurality of fibers forms a braid or fabric. This may have the advantage that that the plurality of fibers can be provided in the form of a tube. Further, the mechanical properties of the spring can be adapted by providing a specific type of braiding or specific type of weaving. For example, the angle of twist between crossing fibers is known to influence the mechanical properties of the resulting product. For example according to an embodiment the angle of twist is between 40 degrees and 50 degrees, e.g. 45 degrees. 45 degrees may be advantageous due to the predominant torsional stresses.

According to an embodiment, introducing the matrix into the cavities comprises embedding the base element in the matrix. For example, in an embodiment where the base element is made of the plurality of fibers, introducing the matrix into the cavities may comprise embedding the plurality of fibers into the matrix, resulting in a matrix embedded base element. According to an embodiment, part of the cavities is provided between the plurality of fibers and the outer envelope. Filling this part of the cavities with the matrix results in a surface of the matrix embedded base element which reproduces the inner surface of the outer envelope. Hence, if the outer envelope is removed, the resulting outer surface of the spring provided by the matrix embedded base element reproduces the inner surface of the outer envelope. Hence, by providing an outer envelope with smooth inner surface (which faces the base element in the intermediate product) results, after removal of the outer envelope, in a smooth outer surface of the spring. In such a case any surface preparation of the spring may be omitted.

According to an embodiment, shaping the intermediate product into the at least two windings comprises wrapping the intermediate product about a central element. For example, a helical spring may be produced by wrapping the intermediate product about the central element with a pitch. According to an embodiment, the central element may be cylindrical element, resulting in cylindrical helical spring. According to further embodiments, the central element may have a different cross-sectional shape and/or a varying diameter along its length, thereby providing a helical spring with correspondingly varying diameter. In a further embodiment, the intermediate product may be wrapped about the central element with all windings being located in a single plane. In this way, a spiral spring may be produced. It should be understood that the inner shape of the spring is easily adapted by providing a respectively shaped central element.

According to an embodiment, the intermediate product comprises matrix supply fluid path. For example, according to an embodiment the matrix supply fluid path is configured for allowing the matrix to flow through the whole length of the intermediate product. According to an embodiment, the intermediate product comprises a first end and a second end opposite the first end. According to an embodiment, flow of the matrix through the intermediate product is effected by applying a suitable pressure difference between the first end and the second end of the intermediate product. To this purpose, an overpressure and/or a vaccum may be used to generate the pressure difference.

According to an embodiment, the matrix supply fluid path is provided by a net or a braided element which has sufficiently large openings, e.g. in the size of 0.1 millimeter (mm) to about 1 millimeter or more. According to an embodiment, the matrix supply fluid path is provided within the base element, e.g. by channels formed in the base element. According to a further embodiment, the matrix supply fluid path is provided radially inside the base element. For example, in an embodiment where the matrix supply fluid path is provided by a net, a sheet of net may be rolled up into a roll of net and the base element may be provided around the roll of net. In another embodiment, the matrix supply fluid path is provided radially outside the base element. For example, according to an embodiment the matrix supply fluid path (e.g. the net) is provided radially between the base element and the outer envelope.

Instead of a net, any other suitable element may serve as a matrix supply fluid path. According to another embodiment, the matrix supply fluid path is provided in the form of a braided tube, braided from a plurality of fibers. However, according to an embodiment, the interstitial spaces provided between the fibers of the matrix supply fluid path are larger than the interstitial spaces between the fibers of the base element. According to an embodiment the matrix supply fluid path in the form of a braided tube is directly braided onto the base element. According to another embodiment, the matrix supply fluid path is provided in the form of a braided tube which is moved over an internal surface of the intermediate product on which the matrix supply fluid path should reside.

According to an embodiment, the matrix supply fluid path is provided by an envelope, e.g. by the inner envelope or the outer envelope. For example, in an embodiment, the matrix supply fluid path may be provided by grooves in the inner envelope (and/or, in other embodiments, in the outer envelope). For example, in an embodiment, the matrix supply fluid path is provided in the form of longitudinal or at least longitudinally extending grooves in the envelope. The grooves may be provided in envelopes which are made of metal, e.g. in an inner envelope in the form of a wire. However, also envelopes made of other materials, e.g. plastic envelopes may be provided with the grooves.

According to an embodiment, the method comprises providing the base element on the matrix supply fluid path; and providing the envelope on the base element. For example, in an embodiment where the base element comprises a plurality of fibers, the fibers may be directly braided onto the matrix supply fluid path.

According to an embodiment, the base element is a first base element and the intermediate product comprises a further, second base element. In such an embodiment, the matrix supply fluid path - if present - may be provided between the first base element and the second base element. According to an embodiment, the second base element is provided radially outside the first base element. For example, in such an embodiment the matrix supply fluid path may be provided on the first base element and the second base element may be provided on the matrix supply fluid path.

According to a more general embodiment, the intermediate product comprises two or more (at least two) base elements. According to an embodiment, the at least two base elements are located concentrically on each other. According to an embodiment, between two radially adjacent base elements a matrix supply fluid path is provided.

In the above there have been described and in the following there will be described exemplary embodiments of the subject matter disclosed herein with reference to a method of producing a spring. It has to be pointed out that of course any combination of features relating to different aspects of the herein disclosed subject matter is also possible. In particular, some features have been or will be described with reference to apparatus type embodiments whereas other features have been or will be described with reference to method type embodiments. However, a person skilled in the art will gather from the above and the following description that, unless other notified, in addition to any combination of features belonging to one aspect also any combination of features relating to different aspects or embodiments, for example even combinations of features of apparatus type embodiments and features of the method type embodiments are considered to be disclosed with this application.

The aspects and embodiments defined above and further aspects and embodiments of the herein disclosed subject matter are apparent from the examples to be described hereinafter and are explained with reference to the drawings, but to which the invention is not limited. Statements and explanations given above are also valid for the description of the examples given below and vice versa.

### BRIEF DESCRIPTION OF THE DRAWINGS

Fig. 1 shows an intermediate product for a spring according to embodiments of the herein disclosed subject matter.
Fig. 2 shows the intermediate product when viewed from line II-II in Fig. 1.
Fig. 3 shows an intermediate product for a spring according to embodiments of the herein disclosed subject matter.
Fig. 4 shows the intermediate product when viewed from line IV-IV in Fig. 3.
Fig. 5 shows a cross section through a part of an exemplary base element according to embodiments of the herein disclosed subject matter.
Fig. 6 illustrates a shaping process for an intermediate product according to embodiments of the herein disclosed subject matter.
Fig. 7 illustrates a further shaping process for an intermediate product in accordance with embodiments of the herein disclosed subject matter.
Fig. 8 illustrates a still further shaping process for an intermediate product in accordance with embodiments of the herein disclosed subject matter.
Fig. 9 shows a fabrication process of an intermediate product in accordance with embodiments of the herein disclosed subject matter.

### DETAILED DESCRIPTION

The illustration in the drawings is schematic. It is noted that in different figures, similar or identical elements are provided with the same reference signs or with reference signs which are different from the corresponding reference signs only within the first digit. Accordingly, the description of similar or identical features is not repeated in the description of subsequent figures in order to avoid unnecessary repetitions. However, it should be understood that the description of these features in the preceding figures is also valid for the subsequent figures unless noted otherwise.

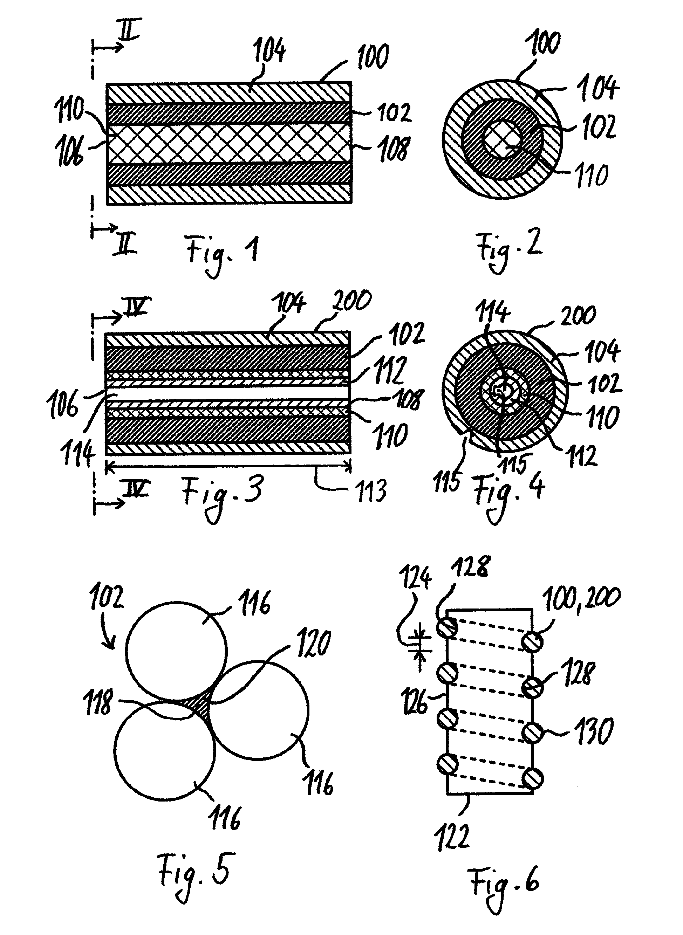

Fig. 1 shows an intermediate product 100 of a spring according to embodiments of the herein disclosed subject matter.

In accordance with an embodiment, the intermediate product 100 comprises a base element 102 within an outer envelope 104. In accordance with an embodiment, the base element 102 is a braided element comprising a plurality of fibers (such as glass fibers) with a plurality of cavities provided by interstitial spaces between the fibers. In accordance with an embodiment, the intermediate product 100 is adapted such that the cavities provided within the outer envelope 100 can be filled with matrix material, which is referred to as "matrix" in the following. In accordance with an embodiment, the outer envelope 104 is tight at least for the matrix material such that the matrix material can be forced through the intermediate product 100 and hence into the cavities by an overpressure applied at a first end 106 of the intermediate product. According to a further embodiment, the outer envelope 104 is gastight such that, if vacuum is applied to a second end 108 of the intermediate product 100, the vacuum draws the matrix through the intermediate product 100 and hence into the cavities. In respective embodiments, only one of the overpressure and the vacuum is applied to the intermediate product respectively the matrix and in another embodiment, both the overpressure and vaccum are applied to the intermediate product respectively the matrix.

In accordance with an embodiment, the intermediate product 100 comprises a matrix supply fluid path 110 which in accordance with an embodiment is formed by net or a braided element. The matrix supply fluid path 110 is located radially within the base element 102. In accordance with an embodiment, the matrix supply fluid path 110 forms a core of the intermediate product 100 about which the base element 102 is braided from a plurality of fibers. Instead of directly braiding the base element 102 onto the core of the intermediate product 100, according to an embodiment the base element 102 may be provided as a separate part, e.g. in the form of a fiber tube.

In accordance with an embodiment, the outer envelope 104 serves as a protector to protect the base element 102. This may in particular advantageous if the base element is a fiber element, such as a fiber tube because the outer envelope may prevent damaging of the fibers during transport of the intermediate product 100. According to an embodiment, the intermediate product 100 is provided as piece good, i.e. in an elongated straight shape. This facilitates transport and prevents unnecessary bending of the base element 102 which would occur if the intermediate product 100 would be provided in the form of roll.

In accordance with an embodiment, the intermediate product 100 has its cavities filled with the (uncured) matrix before it is shaped into at least two windings of the spring (not shown in Fig. 1).

Fig. 2 shows the intermediate product 100 when viewed from line II-II in Fig. 1.

In accordance with an embodiment, a base element 102 and an outer envelope 104 are concentrically formed about the core of the intermediate product 100 which in accordance with an embodiment already described with regard to Fig. 1 is formed by a matrix supply fluid path 110.

Fig. 3 shows an intermediate product 200 of a spring according to embodiments of the herein disclosed subject matter.

The intermediate product 200 comprises an inner envelope 112 which may be of the same material as an outer envelope 104. In accordance with an embodiment, a matrix supply fluid path 110 of the intermediate product 200 is formed by a net or braided element provided on the inner envelope 112. Onto the matrix supply fluid path 110 a base element 102 is braided from a plurality of fibers. As described with regard to Fig. 1, the plurality of fibers have a plurality of interstitial spaces between the fibers, forming cavities which can be filled with matrix material.

In accordance with an embodiment, the inner envelope 112 and the outer envelope 104 define a radial space therebetween in which the other layers of the intermediate product 200 are located. By providing a pressure difference between opposite ends 106, 108 of the intermediate product 200, generating a flow of matrix through the intermediate product 200, the matrix is filled into the cavities. In accordance with an embodiment the filling of the cavities with the matrix is performed after shaping the intermediate product 200 into the at least two windings. According to another embodiment, the matrix is filled into the cavities before shaping the intermediate product 200 into the at least two windings, as described with regard to the intermediate product 100 in Fig. 1. A pressure difference between opposite ends 106, 108 of the intermediate product 200 may be generated by overpressure and/or vacuum, as described with regard to Fig. 1.

In accordance with an embodiment, the intermediate product 200 is hollow, having a free space 114 in the intermediate product 200, thereby saving material and weight.

In accordance with an embodiment, the intermediate product 200 is provided in an elongated (e.g. straight) form with a certain length 113.

Fig. 4 shows the intermediate product 200 when viewed from line IV-IV in Fig. 3.

In accordance with an embodiment, the intermediate product 200 has all its elements, i.e. the inner envelope 112, the matrix supply fluid path 110, the base element 102 and the outer envelope 104 arranged concentrically with regard to each other, as shown in Fig. 4.

In accordance with a further embodiment, the base element 102 consists of a single layer, e.g. a single fiber layer. According to another embodiment, the base element 102 comprises or consists of two or more layers, e.g. two or more fiber layers (not shown in Fig. 4). Each of the individual fiber layers may be provided by a separate fiber tube, consisting e.g. of braided or woven fibers.

In accordance with an embodiment, the outer envelope 104 comprises a predetermined breaking line 115 which in an embodiment extends along the length of the intermediate product 200 and which facilitates removal of the outer envelope 104. Likewise, in accordance with an embodiment the inner envelope 112 comprises a predetermined breaking line 115 which facilitates removal of the inner envelope 112. The predetermined breaking line 115 may be provided in the form of a recess which extends through only part of the thickness of the respective envelope 104, 112, as shown in Fig. 4. The predetermined breaking line 115 may be formed as described in the European patent application No. 12189609.6.

Removal of the outer envelope 104 and/or the inner envelope 112 is optional.

Fig. 5 shows a cross section through a part of an exemplary base element 102 according to embodiments of the herein disclosed subject matter.

The depicted part of the base element 102 shows three fibers 116 and a cavity 118 in the form of an interstitial space therebetween. It is readily understood that when a matrix 120 is sucked and/or pushed through the base element 102, the cavities 118 are filled with the matrix 120. Further, it is readily understood that without the matrix 120 the fibers 116 may move with regard to each other, thereby providing flexibility to the plurality of fibers 116 and hence to the entire base element 102, thereby allowing shaping of the intermediate product into the at least two windings. With the matrix 120 filled into the cavities 118 and hardened in the cavities 118, the matrix 120 fixes the fibers 116 relative to each other, thereby preventing flexibility of the plurality of fibers 116 and hence of the base element 102. In this stage, with the matrix 120 filled and hardened in the cavities 118, the shape of the intermediate product (not shown in Fig. 5) is fixed into the at least two windings, thereby providing a spring which comprises a composite material consisting of at least the fibers 116 and the matrix 120.

It should be understood, that the cavities 118 may be provided not only by interstitial spaces between the fibers 116, but rather by any other suitable means/interacting elements.

Fig. 6 illustrates a shaping process for an intermediate product 100, 200 according to embodiments of the herein disclosed subject matter.

In accordance with an embodiment, the intermediate product 100, 200 is wrapped around a central element 122 with a pitch 124. In Fig. 6 in the intermediate product 100, 200 and the central element 122 are shown in cross-sectional view in order to illustrate some embodiments.

In accordance with an embodiment, the central element 122 comprises on its outer surface 126 a recess 128 which extends around the central element 122 in a coiled manner, thereby defining a groove into which the intermediate product 100, 200 fits. In accordance with an embodiment, the intermediate product 100, 200 is positioned in the recess 128 around the central element 122. In this way, the shape of the resulting spring 130 formed by the intermediate product 100, 200 is defined by the recess 128. It should be understood that the intermediate product 100, 200 and hence the resulting spring 130 extends continuously around the central element 122, while Fig. 6 shows only the cross-sectional view of the spring 130.

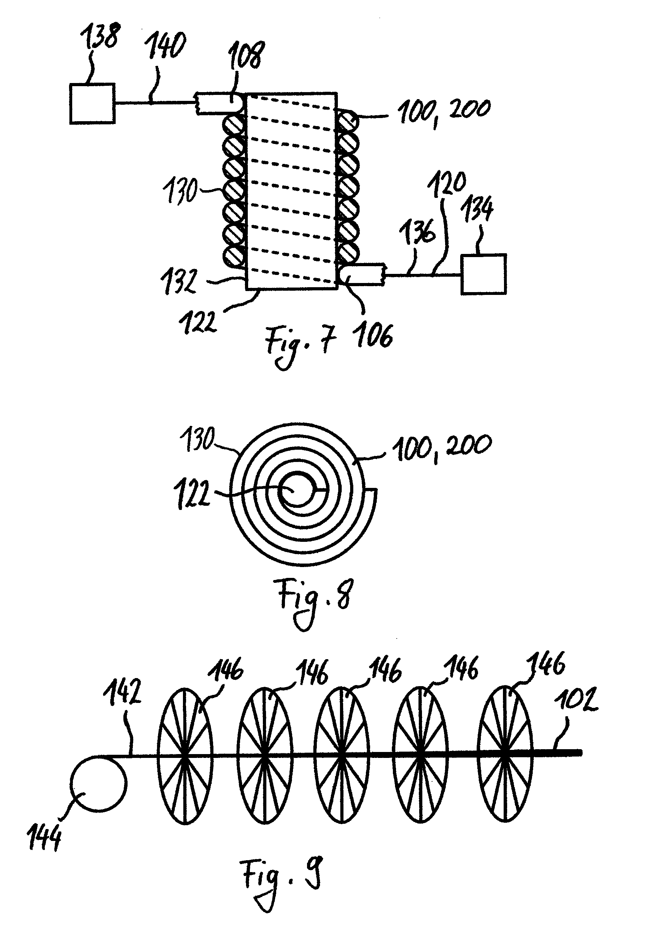

Fig. 7 illustrates a further shaping process for an intermediate product 100, 200 in accordance with embodiments of the herein disclosed subject matter.

The shaping process illustrated in Fig. 7 also uses central element 122. However, in contrast to Fig. 6 the central element 122 shown in Fig. 7 has a cylindrical surface 132, and in particular a surface without recesses, for receiving the intermediate product 100, 200. The central element and the intermediate product 100, 200 are shown in cross-sectional view in Fig. 7 in order to illustrate the cylindrical surface 132.

According to an embodiment, the intermediate product 100, 200 is wrapped onto the surface 132 of the central element 122. According to an embodiment, the intermediate product is wrapped around the central element 122 without space between neighboring portions of the intermediate product 100, 200, as shown in Fig 7, resulting in the spring 130.

In accordance with an embodiment, a matrix supply 134 is provided which provides pressurized matrix 120 via a supply line 136 to a first end 106 of the intermediate product 100, 200 which is wrapped about the central element 122. Further in accordance with an embodiment, a vacuum pump 138 is provided, applying a vacuum to a second end 108 of the intermediate product 100, 200 via a vacuum line 140. A pressure difference between the first end 106 and the second end 108 of the intermediate product 100, 200 generates a flow of matrix 120 through the intermediate product 100, 200, thereby filling the plurality of cavities provided by the base element with the matrix.

It should be understood that alternatively to the configuration shown in Fig. 7 the matrix 120 provided by the matrix supply 134 may either be not pressurized or the vacuum pump 138 may be omitted, in accordance with respective embodiments. In still other embodiments the cavities are already filled with the matrix before the intermediate product is wrapped around the central element 122. Further, it should be noted that the configuration shown in fig. 7 may also be used to introduce the matrix 120 into the cavities of the intermediate product 100,200 before the shaping of the intermediate product 100, 200 into the at least two windings. It should be understood, that in such a case the intermediate product 100, 200 may extend straight (not shown in fig. 7) between its first end 106 and its second end 108 during introducing the matrix 120 into the cavities of the intermediate product 100, 200 as described with regard to Fig. 7.

Fig. 8 illustrates a further shaping process for an intermediate product 100, 200 in accordance with embodiments of the herein disclosed subject matter.

In accordance with an embodiment, the shaping process illustrated in Fig. 8 includes wrapping the intermediate product 100, 200 of about a central element 122 into at least two windings, wherein the at least two windings are located in single plane (drawing plane of Fig. 8).

Once shaped into the spring 130, e.g. by any of the shaping processes disclosed herein, the matrix in the cavities of the intermediate product is hardened. Hardening depends on the material used for the matrix and may include chemical hardening, curing, setting, e.g. thermosetting, etc.

Fig. 9 shows a fabrication process of an intermediate product 100, 200 in accordance with embodiments of the herein disclosed subject matter.

In the fabrication process illustrated in Fig. 9 a core 142 is provided from a roll 144 to at least one braiding device 146, e.g. five braiding devices, which braid a base element 102 onto the core 142. According to an embodiment, each braiding device 146 is configured for braiding one fiber layer over the core 142. Accordingly, in an exemplary embodiment shown in Fig. 9, the base element 102 on the core 142 comprises five fiber layers. Thereafter, the outer envelope (not shown in fig. 9) may be placed onto the base element 102, e.g. as described in European patent application No. 12189616.1.

The core 142 may be a matrix supply fluid path 110 or, according to another embodiment, an inner envelope 112 optionally with a matrix supply fluid path 110 thereon.

It should be understood that the fabrication of the intermediate product 100, 200 may be performed in many other suitable ways, including the processes described in WO 2010/129975 A2 and AT 5081120 B1. Further, the materials used for implementation of a method according to embodiments of the herein disclosed subject matter (e.g. the materials of the base element 102, the outer envelope 104, the fluid supply path 110, the inner envelope 112 and the matrix 120) may be chosen according to the actual requirements and boundary conditions imposed by the technical specification of the spring to be produced. It should be understood that in particular the materials disclosed in WO 2010/129975 A2 and AT 5081120 B1 may be used for implementation of embodiments of the herein disclosed subject matter. For example, the base element can be a fiber element as disclosed in AT 5081120 B1 or WO 2010/129975 A2. The fibers may be natural fibers or artificial fibers and may be made of e.g. made of glass, carbon, aramide, basalt, hemp, flax, cotton or mixtures thereof, just to name some examples. The base element may be provided in the shape of a tube and may be a braided, knitted or woven element. Further, any of the inner envelope and the outer envelope may be a flexible tube as disclosed in AT 5081120 B1 or WO 2010/129975 A2. For example, the envelope may be of rubber, plastic, polymer, polyvinylchloride, polyethylene, polyamide, polyurethane, silicone, polytetrafluorethylene, etc. According to other embodiments, the envelope is made of metal, such as aluminum or steel. Further, the matrix supply fluid path may be of the type disclosed in WO 2010/129975 A2, e.g. a loop(mesh)-forming braid, a fleece, etc. Further the matrix supply fluid path may be made of grooves, e.g. in the inner and/or outer envelope. The matrix may be of the type disclosed in WO 2010/129975 A2, e.g. liquid plastic (thermoplastic polymer, thermosetting polymer), etc.

It should be understood that the thicknesses of the individual layers in the drawings, e.g. of the layers 102, 104, 110, 112 may not drawn to scale but may be exaggerated for easier description.

Further, it should be understood that the conventional coiling machine may be used for shaping the intermediate product into the at least two windings.

It should be noted that any entity disclosed herein (e.g. base elements, central elements, envelopes, parts, paths, portions, surfaces, components, units, structures and devices, just to name some examples) is not limited to a dedicated entity as described in some embodiments. Rather, the herein disclosed subject matter may be implemented in various ways and with various granularity while still providing the specified functionality. Further, it should be noted that according to embodiments a separate entity (e.g. base elements, central elements, envelopes, parts, paths, portions, surfaces, components, units, structures and devices) may be provided for each of the functions disclosed herein. According to other embodiments, an entity (e.g. base elements, central elements, envelopes, parts, paths, portions, surfaces, components, units, structures and devices) is configured for providing two or more functions as disclosed herein. According to still other embodiments, two or more entities (e.g. base elements, central elements, envelopes, parts, paths, portions, surfaces, components, units, structures and devices) are configured for providing together a function as disclosed herein.

It should be noted that the term "comprising" does not exclude other enties or steps and the "a" or "an" does not exclude a plurality. Also entities described in association with different embodiments may be combined. It should also be noted that reference signs in the claims should not be construed as limiting the scope of the claims.

Further, it should be noted that while the exemplary illustrations of methods and entities in the drawings include a particular combination of several embodiments of the herein disclosed subject matter, any other combination of embodiments is also possible and is considered to be disclosed with this application.

In order to recapitulate some of the above described embodiments of the present invention one can state:

In accordance with embodiments of the herein disclosed subject matter it is described a method of producing a spring 130 wherein the spring 130 comprises at least the tool windings and is formed of a composite material, wherein the composite material and comprises a matrix 120 and the base element 102. The method comprises providing an intermediate product 100, 200 comprising the base element 102 within an outer envelope 104, wherein the base element 102 provides a plurality of cavities 118 within the altar envelope. Further, the method comprises shaping the intermediate product 100, 200 into the at least two windings and introducing the matrix 120 into the cavities 118 before, during or after the shaping of the intermediate product 100, 200. After shaping of the intermediate product 100, 200, the method comprises hardening the matrix 120 in the cavities 118. Optionally, the intermediate product 100, 200 comprises a matrix supply fluid path 110 which promotes flow of the matrix 120 through the intermediate product 100, 200 in order to fill the plurality of cavities 118.

### List of reference signs:

- 100, 200: intermediate product
- 102: base element
- 104: outer envelope
- 106: first end of 100
- 108: second end of 100
- 110: matrix supply fluidic path
- 112: inner envelope
- 113: length
- 114: free space
- 115: predetermined breaking line
- 116: fiber
- 118: cavity
- 120: matrix
- 122: central element
- 124: pitch
- 126: outer surface of 122
- 128: recess in 126
- 130: spring
- 132: cylindrical surface
- 134: matrix supply
- 136: supply line
- 138: vacuum pump
- 140: vacuum line
- 142: core
- 144: roll of 142
- 146: braiding device

## Claims

1. Method of producing a spring (130), the spring (130) comprising at least two windings and being formed of a composite material, the composite material comprising a matrix (120) and a base element (102), the method comprising:
providing an intermediate product (100, 200) comprising the base element (102) within an outer envelope (104), the base element (102) providing a plurality of cavities (118) within the outer envelope (104);
shaping the intermediate product (100, 200) into the at least two windings;
introducing the matrix (120) into the cavities (118) before, during or after the shaping of the intermediate product (100, 200);
after the shaping of the intermediate product (100, 200), hardening the matrix (120) in the cavities (118).

2. Method according to claim 1, the method further comprising:
providing an inner envelope (112) within the outer envelope (104), the base element (102) being located between the outer envelope (104) and the inner envelope (112).

3. Method according to claim 2, the inner envelope (112) being dimensionally stable and plastically deformable, the method optionally comprising shaping of the intermediate product into the at least two windings on a conventional coiling machine for metal springs.

4. Method according to any one of the preceding claims, the outer envelope (104) comprising a predetermined breaking line (115).

5. Method according to any one of the preceding claims, the base element (102) comprising a plurality of fibers (116) and the plurality of cavities (118) is provided at least in part by the interstitial spaces between the fibers (116).

6. Method according to the preceding claim, wherein the plurality of fibers (116) form a braid or a fabric.

7. Method according to any one of claims 5 or 6, wherein the fibers (116) are glass fibers.

8. Method according to any one of the preceding claims, wherein shaping the intermediate product (100, 200) into the at least two windings comprises wrapping the intermediate product (100, 200) about a central element (122).

9. Method according to any one of the preceding claims, further comprising removing the outer envelope (104).

10. Method according to any one of the preceding claims, wherein the intermediate product (100, 200) comprising a matrix supply fluid path (110).

11. Method according to the preceding claim, the matrix supply fluid path (110) being provided within the base element (102).

12. Method according to any one of the preceding claims, the matrix supply fluid path (110) being provided radially inside the base element (102).

13. Method according to any one of claims 10 to 12, the matrix supply fluid path (110) being provided by a net, a braided element and/or a groove in the inner and/or outer envelope.

14. Method according to any one of claims 10 to 13, further comprising:
providing the base element (102) on the matrix supply fluid path (110);
providing the envelope on the base element (102).

15. Method according to claim 14, the method including the features of any one of claims 2 or 3, the method including the features of any one of claims 5 to 7, and the method further comprising:
providing the matrix supply fluid path (110) on the inner envelope (112);
producing the base element (102) from the plurality of fibers (116) onto the matrix supply fluid path (110).
